(19) Europäisches Patentamt

European Patent Office

Office européen des brevets

(11) **EP 1 962 559 A1**

(12) **EUROPEAN PATENT APPLICATION**

(43) Date of publication:
   **27.08.2008 Bulletin 2008/35**

(51) Int Cl.:
   *H04S 7/00* *(2006.01)*     *G01H 7/00* *(2006.01)*

(21) Application number: **07003585.2**

(22) Date of filing: **21.02.2007**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK RS**

(71) Applicant: **Harman Becker Automotive Systems
   GmbH
   76307 Karlsbad (DE)**

(72) Inventor: **Hess, Wolfgang
   76307 Karlsbad (DE)**

(74) Representative: **Grünecker, Kinkeldey,
   Stockmair & Schwanhäusser
   Anwaltssozietät
   Leopoldstrasse 4
   80802 München (DE)**

(54) **Objective quantification of auditory source width of a loudspeakers-room system**

(57)     The present invention relates to a method for estimating acoustic characteristics of a loudspeakers-room system, in particular, the auditory source width, comprising generating at least one first and at least one second frequency modulated noise signal; outputting the at least one first noise signal by a first loudspeaker of at least one pair of loudspeakers; outputting the at least one second noise signal by the second loudspeaker of the at least one pair of loudspeakers; detecting binaurally, in particular, by means of a dummy head, the at least one first and at least one second noise signals to obtain detected signals; filtering the detected signals by a filter bank, in particular, by a non-uniform bandpass filter bank, to obtain sub-band signals for a predetermined number of sub-bands; determining the binaural activity of at least one of the sub-band signals; and determining the acoustic source width of the generated noise signals based on the determined binaural activity of the at least one of the sub-band signals.

FIG. 1

EP 1 962 559 A1

**Description**

**Field of Invention**

The present invention relates to the art of quantification of auditory spatial perception in closed rooms, e.g., concert halls or vehicle compartments. In particular, the invention relates to a method for estimating the auditory spatial characteristics of a loudspeakers-room system, i.e. the perceived auditory source width of sound sources.

**Background of the invention**

Sound-systems including loudspeakers are ubiquitously found in closed rooms. The acoustic quality of proved audio entertainment and audio information systems heavily depends on the acoustic characteristics of the actual listening rooms in which they are installed. Such rooms differ vastly in the dimensions and shapes, e.g., in the range from concert halls to vehicle compartments.

As a sound is propagated away from its source, a certain proportion of it reaches the listener as direct sound following a straight path from source to ear. A large proportion of the sound, however, radiates in all directions from the source and encounters the boundaries (e.g., walls) of any enclosure the sound occurs within. The combined direct sound and reflections that arrive at the listener's ear cause auditory spatial perception. The reflected sound is delayed and frequency colored. The delay time, frequency coloration and reverberation of sound events in the spatial (3D) dimensions of a room are captured by two input ports, the eardrums, and interpreted cognitively to give humans an auditory perception of the sound system and the space in which a sound occurs.

The sound reflections can be classified as early lateral reflections that are perceived within 1 to 80 ms after the direct sound and late reflections perceived more than 80 ms after the direct sound. The relationship of early lateral reflections with direct sound is used by the brain as cues to provide us with a sense of the direction and location of the sound source. Due to the reverberation characteristics of a listening room the auditory source is perceived as exhibiting a finite lateral extent, i.e. an auditory source width. On the other hand, the temporal and spatial separation of sound energy of the late reflections causes the perception of being enveloped by the sound. This phenomenon is known as the listener envelopment.

A prominent problem in the art of room acoustic and, thus, acoustic architecture is to derive and measure objective quantifications of the spatial auditory characteristics of a closed listening room. Monaural parameters known in the art, as the Clarity $C_{80}$ and Definition $D_{50}$, the Early Decay Time Gap (EDTG) or Center Time $T_S$, often not correlate well enough with perceptible characteristics. In addition, the measurement results of established binaural parameters as, e.g., the Interaural Cross-Correlation (IACC) or Lateral Energy Fraction (LEF) significantly depend on the actual measurement position. Moreover, a ranking of the listener rooms, e.g., concert halls, based on such established parameters does not sufficiently match the actual auditory perception and preferences of human listeners.

In fact, in the art no unambiguous and reliable evaluation method for consistently quantifying the auditory source and listener room characteristics by means of established parameters is known. Therefore, it is, in particular, very difficult to adjust sound-systems including loudspeakers in closed rooms in order to provide optimum spatial audio quality. Presently, the spatial acoustic tuning of sound-systems has to be performed by skilled sound engineers for each room in which a sound-system has to be installed. This tuning process not only is time-consuming and expensive but also results in more or less subjective solutions in accordance with individual hearing preferences of the person who is in charge for the adjustment of a sound-system.

It is therefore an object of the present invention to provide a method for objectively estimating the acoustic characteristics of an acoustic room of a loudspeakers-room system independent of measurement positions and in compliance with the human auditory spatial perception.

**Description of the Invention**

The above-mentioned drawbacks in the art are overcome by the method for estimating acoustic characteristics of a loudspeakers-room system according to claim 1. This method comprises the steps of
generating at least one first and at least one second noise;
outputting the at least one first noise signal by a first loudspeaker of at least one pair of loudspeakers;
outputting the at least one second noise signal by the second loudspeaker of the at least one pair of loudspeakers;
detecting binaurally (e.g., by a dummy-head on a torso with shoulders or assembled on a manikin or assembled on a stand) the at least one first and at least one second noise signals to obtain detected signals;
filtering the detected signals by an auditory filter bank, in particular, by a non-uniform auditory bandpass filter bank, to obtain sub-band signals for a predetermined number of sub-bands;
determining the binaural activity of at least one of the sub-band signals;

determining the acoustic source width of the generated noise signals based on the determined binaural activity of the at least one of the sub-band signals.

The at least one first noise signal and the at least one second noise signal are stereo signals and the first loudspeaker of the at least one pair of loudspeakers is different from the second loudspeaker of the same pair of loudspeakers.

The detected signals are processed in the sub-band domain similar to the human physiologic processing of audio signals and the binaural activity is determined for at least one sub-band, usually for a number of sub-bands, in particular, for all sub-bands. The binaural activity represents a three-dimensional output obtained by processing of the detected signals. The binaural activity obtained by processing audio signals close to the processing of the human auditory system can be seen as a measure for binaural neural activity. It results from a cross-correlation analysis of the detected auditory bandpass filtered signals as known in the art.

The algorithm that is the basis for the calculation of the binaural activity was published in 1948 by Jeffress in a seminal scientific paper and gives a good model-sight to reproduce the behavior of the human auditory system with regard to interaural time differences. This algorithm is currently the foundation of most computational models of sound localization. Its central feature is a running cross-correlation analysis of auditory bandpass-filtered signals, resulting in a coincidence analysis. Fundamental studies and practical realizations of the algorithm were done by Blauert and Cobben; see, J. Blauert and W. Cobben, Some Consideration of Binaural Cross Correlation Analysis, Acustica, vol. 39, p. 96-104, 1978, and references therein.

The amendment of Lindemann (1986) by introducing lateral inhibition, and his computational implementation allowed simultaneous simulation of interaural time differences and interaural level differences in one model structure. Gaik's amendment (1990) adapted the algorithm to head-related signal processing and therefore an exact simulation of human auditory localization (see: Jeffress, L.A. (1948): A place theory of sound localization, J. Comparative and Physiological Psychology, Vol. 41, 35-39; Lindemann, W. (1986): Extension of a binaural cross-correlation model by contralateral inhibition. I. Simulation of lateralization for stationary signals, J. Acoust. Soc. Am., Vol. 80, 1608-1622; Gaik, W. (1993): Combined evaluation of interaural time and intensity differences: Psychoacoustic results and computer modeling, J. Acoust. Soc. Am., Vol. 94, 98-110). These modifications of the basic algorithm can be implemented for carrying out the present invention.

Based on the binaural activity obtained by the recited algorithm the auditory source width of the noise signals can be determined. This can, e.g., be done by determining the lateralization, i.e., the lateral or horizontal width, of the obtained binaural activity (see below).

It is noted that detailed experiments have been carried out with test persons as listeners that have been provided with ITD noise signals directly through headphones. The test persons judged their subjective impressions with respect to the auditory source width and their judgments have been compared with the results of the calculations of the auditory source width based on the above-mentioned algorithm. The empirical studies have shown that the amount of the auditory source width depends on the phase shift between the ITD noise signals and the frequency distance of the narrowband noise signals.

When the ITD noise signals are output by loudspeakers in an acoustic room surrounding surfaces will reflect, scatter and bundle sound signals and mix phase relations, i.e. the auditory source width is altered by the acoustic room.

The binaural localization model algorithm used for the above processing is adapted based on experimental results in order to reproduce the processing of the human auditory system. A temporal smoothing to simulate the binaural sluggishness of the auditory system could be employed using a floating rectangular time window of 100 ms duration.

By means of the inventive method, an objective quantitative estimation of the acoustic characteristics of a loudspeakers-room system can be achieved on the basis of the determination of the auditory source width as indicated by the binaural activity.

According to an embodiment, the inventive method comprises before the step of filtering the detected signals to obtain filtered sub-band signals for a predetermined number of sub-bands the steps of filtering (corresponding to the physiologic filtering of the human outer ear) the detected signals by head-related transfer functions to obtain first filtered signals; and

filtering the first filtered signals corresponding to the physiologic filtering of the human middle ear to obtain second filtered signals;

and further comprising half-wave rectifying and low-pass filtering the filtered sub-band signals to obtain half-wave rectified sub-band signals;

and wherein the step of determining the binaural activity of the at least one of the filtered sub-band signals comprises the steps of

determining the interaural time differences (ITD) and the interaural level differences (ILD) of the half-wave rectified sub-band signals; and

combining the interaural time differences and the interaural level differences to obtain the binaural activity over time and lateral width for each of the predetermined number of sub-bands. In this case, the acoustic source width is determined from the smoothed lateral width of the binaural activity.

The filtering by the head-related transfer functions to obtain the first filtered signals is preferably performed through the pinnae of a dummy head.

The outer ear modifies the sound waves in transferring the acoustic vibrations to the ear drum (tympanic membrane). It consists of a partially cartilaginous flange (the pinna) which includes a resonant cavity (the concha) at the entrance to the ear canal (ex-ternal auditory meatus). The ear canal terminates at the ear drum, which may be considered as the interface of the outer- and middle-ear.

Sound reaches the inner ear or cochlea via three middle-ear bones - the malleus, incus and stapes - which form an interconnecting link between the ear drum and the input port of the cochlea. The transformer action of the middle-ear helps to match the impedance of the air in the ear canal to the much higher impedance of the cochlea fluids (impedance transformation to increase the sensitivity of the auditory system).

If a sound source is closer to one ear of a listener than to the other ear, the sounds generated by the sound source will arrive at slightly different times at the respective ears. This difference in arrival times is termed interaural time difference or ITD. Experiments have shown that the ITD as well as the interaural level difference (ILD), e.g., caused by some shading due to the head position, and the sound spectrum are the main clues for auditory localization in three dimensions. The human auditory system processes the respective qualities for auditory spatial perception.

The combination of the interaural time differences and the interaural level differences to obtain the binaural activity over time and the lateral width for each of the predetermined number of sub-bands represents a particularly preferred way to obtain the auditory source width, namely, from the lateral width of the binaural activity. Experiments have proven that in this way reliable and satisfying quasi-objective estimates for the auditory source width are available.

The at least one first and at least one second noise signals can be binaurally detected by two microphones installed in the artificial ears of a dummy head. Thus, a realistic loudspeaker-room-listener sound transfer can be taken into account. Each of the microphones detects both noise signals and thus ITD and ILD are present in the detected signals similar to the perception of a human listener.

Preferably, the first and the second noise signals represent broadband noise with sinusoidally varying interaural time differences, i.e. these noise signals are functions of some predetermined maximum interaural time interval $\Delta t$ that is part of the argument of a sinus function and results in some ITD. The ITD caused by the time interval $\Delta t$ is, thus, contained in the generated noise signals independent on the actual loudspeakers-room transfer and the actual position of signal measurement.

Experiments have shown that particularly appropriate noise signals for the analysis of the acoustic characteristics of a loudspeakers-room system are given by

$$l(t) = \sum_{i=1}^{N} A \sin\left(\frac{2\pi f_i t}{F_s} + \theta_i + \pi f_i \Delta t \sin\left(\frac{2\pi F_M t}{F_s}\right)\right)$$

$$r(t) = \sum_{i=1}^{N} A \sin\left(\frac{2\pi f_i t}{F_s} + \theta_i - \pi f_i \Delta t \sin\left(\frac{2\pi F_M t}{F_s}\right)\right),$$

wherein A denotes an amplitude, $f_i$, $F_M$ and $F_s$ denote the carrier frequencies, the modulation frequency and the sampling rate, respectively, $\Delta t$ is a predetermined maximum interaural time difference, $\theta_i$ are some arbitrarily chosen phases and t is the discrete time index. It is noted that in the present invention the noise signals can be defined as above without explicit dependence of the respective right terms of the formulae on the carrier frequencies, i.e.

$$l(t) = \sum_{i=1}^{N} A \sin\left(\frac{2\pi f_i t}{F_s} + \theta_i + \pi \Delta t \sin\left(\frac{2\pi F_M t}{F_s}\right)\right)$$

$$r(t) = \sum_{i=1}^{N} A \sin\left(\frac{2\pi f_i t}{F_s} + \theta_i - \pi \Delta t \sin\left(\frac{2\pi F_M t}{F_s}\right)\right).$$

A sinusoidal ITD is generated. The maximum lateral deflection is represented by $\Delta t$. Subsequently, the ITD is re-measured in order to determine the influences of the acoustic room and the loudspeakers-systems.

The herein disclosed method may also comprise smoothing of the binaural activity in time and the acoustic source width may be determined from the lateral width of the temporally smoothed binaural activity. The smoothing may be performed by a floating (running) rectangular integration window, in particular, of about 10 - 200 ms duration, in particular, 50 - 150 ms duration. In other words, a time window of a predetermined duration overlays the binaural activity such that a temporal smoothing or integration results. This causes a smoothing of the lateral sinusoidal binaural activity. The lateral extent of the binaural activity can, thus, be determined as an absolute measure for the auditory source width. Due to the employment of the floating rectangular integration window this measure is relatively constant.

By the temporal smoothing the corresponding auditory processing of the human auditory system is modeled. A duration of 100 ms is particularly preferred.

Another useful way to determine the acoustic source width is to determine the average value of the lateralization of the binaural activity over time and over the predetermined number of sub-bands. When the acoustic source width is determined by this average value a particular reliable estimate for the acoustic source width is obtained.

In one preferred embodiment of the inventive method the binaural activity may be cut at the edges and the acoustic source width of the generated noise signals is determined based on the cut binaural activity. Cutting the edges is advantageous in avoiding side-lobes. Preferably the edged are cut adaptively by employing a cutting function with an adaptive threshold. The higher the binaural activity density is the more side-lobes occur. Thus, an adaptive threshold depending on the activity density helps to efficiently suppress side-lobes. Single auditory events below the adaptive threshold are cut to weight lateral deviation of binaural activity.

Furthermore, the acoustic source width can be estimated by the lateral extent of the binaural activity in single frequency-bands which is weighted over all auditory frequency bands by applying a weighting curve. The weighting can be performed depending on the binaural activity density.

According to an example of the inventive method binaural activities of more than one of the filtered sub-band signals, in particular, of all of the filtered sub-band signals, can be determined and respectively the acoustic source width from each of the filtered sub-band signals for which binaural activities are determined based on the respective binaural activities can be determined, and a weighted average of the acoustic source widths for the filtered sub-band signals for which binaural activities are determined can be determined in order to obtain a single averaged acoustic source width.

Thereby, the estimate of the auditory source width is not limited to one frequency band and, thus, a more satisfying quantitative estimate for the acoustic characteristics of the loudspeakers-room system becomes available. The weighted average of the acoustic source widths for the filtered sub-band signals for which binaural activities are determined can be determined by applying a frequency weighting curve similar to well-known equal loudness curve, e.g., according to ISO 226 or the 468-weighting curve, originally proposed in CCIR recommendation 468.

Again, temporal smoothing by a rectangular window can be performed as mentioned above.

More than one pair of loudspeakers can be employed in the present invention. Thus, according to another embodiment the at least one first noise signal is output by respective first loudspeakers of at least two pairs of loudspeakers;

the at least one second noise signal is output by the respective second loudspeakers of the at least two pair of loudspeakers;

a single averaged acoustic source width is obtained for each of the pairs of loudspeakers; and

the single averaged acoustic source widths obtained for each of the pairs of loudspeakers are weighted depending on the position of the pairs of loudspeakers in the room of the loudspeakers-room system to obtain a single weighted overall acoustic source width. Thus, the acoustic characteristics of loudspeakers-room system comprising multiple pairs of loudspeakers can be quantitatively estimated on the basis of the determined single value for the weighted overall acoustic source width in dependence on the spatial arrangement of multiple pairs of loudspeakers.

It is noted that in all of the above examples, a determined value of a binaural activity that lies below a predetermined value can be set to zero. By this measure, sidelobes that occur along the lateral width distribution of the determined binaural activity for rather high activity values can be suppressed that otherwise affect the reliability of the result for the determined acoustic source width.

The present invention also provides a method for adjusting a sound-system installed in a room, in particular, a vehicle compartment, comprising the steps of the method for estimating acoustic characteristics of a loudspeakers-room system according to one of the preceding claims and wherein the sound-system is adjusted in accordance with the determined auditory source width.

The present invention, moreover, provides a computer program product comprising one or more computer readable media having computer-executable instructions for performing the steps of one of the above examples of the herein disclosed method for estimating acoustic characteristics of a loudspeakers-room system.

The above-mentioned object is also achieved by a sound analyzing system for estimating acoustic characteristics of a loudspeakers-room system, comprising

a computer configured to generate at least one first and at least one second noise signal wherein the at least one first and at least one second noise signals show some interaural time difference (ITD);

at least one pair of loudspeakers configured to receive the at least one first and at least one second noise signals and to output the at least one first noise signal by a first loudspeaker of the at least one pair of loudspeakers and to output the at least one second noise signal by the second loudspeaker of the at least one pair of loudspeakers;

binaural recording means, in particular, comprising a dummy head comprising a pair of ear-shaped molds wherein each of the molds accommodates a microphone configured to detect the at least one first and at least one second noise signals, wherein the binaural recording means is configured to obtain recorded signals based on the least one first and at least one second noise signals output by the at least one pair of loudspeakers and to input the recorded signals into the computer; and

wherein the computer is also configured to determine the binaural activity of the recorded signals and to determine the acoustic source width of the at least one first and at least one second noise signals based on the determined binaural activity of the recorded signals.

According to an embodiment the computer of the sound analyzing system is configured to generate the first and the second noise signals according to

$$l(t) = \sum_{i=1}^{N} A \sin\left(\frac{2\pi f_i t}{F_s} + \theta_i + \pi f_i \Delta t \sin\left(\frac{2\pi F_M t}{F_s}\right)\right)$$

$$r(t) = \sum_{i=1}^{N} A \sin\left(\frac{2\pi f_i t}{F_s} + \theta_i - \pi f_i \Delta t \sin\left(\frac{2\pi F_M t}{F_s}\right)\right),$$

wherein A denotes an amplitude, $f_i$, $F_M$ and $F_s$ denote the carrier frequencies, the modulation frequency and the sampling rate, respectively, $\Delta t$ is a predetermined maximum interaural time difference, $\theta_i$ are some arbitrarily chosen phases and t is the discrete time index.

The computer may also be configured to

process the recorded signals by

filtering the recorded signals by head-related transfer functions to obtain first filtered signals;

filtering the first filtered signals corresponding to the physiologic filtering of the middle ear to obtain second filtered signals;

sub-band filtering the second filtered signals to obtain sub-band signals for a predetermined number of sub-bands;

half-wave rectifying and low-pass filtering the sub-band signals to obtain half-wave rectified sub-band signals;

and to

determine the interaural time differences and the interaural level differences of the half-wave rectified sub-band signals; and to

combine the interaural time differences and the interaural level differences to obtain the binaural activity over time for each of the predetermined number of sub-bands.

The computer may also be configured to determine a weighted average of the acoustic source widths for the filtered sub-band signals to obtain a single averaged acoustic source width.

Moreover, the sound analyzing system may further comprise a floating rectangular integration window filtering means configured to smooth the binaural activity in time and wherein the computer is configured to determine the acoustic source width from the lateral width of the temporally smoothed binaural activity.

In principle, the computer of the sound analyzing system may be configured to perform all the weighting and smoothing operations described above in the context of the inventive method.

Additional features and advantages of the present invention will be described with reference to the drawing. In the description, reference is made to the accompanying figure that is meant to illustrate an embodiment of the invention.

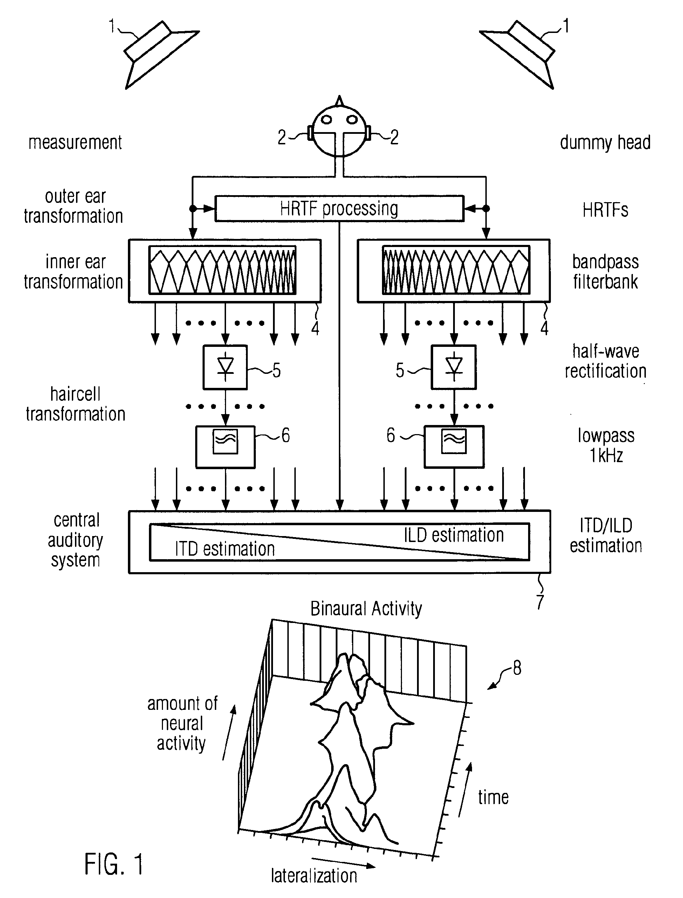

Figure 1 illustrates an example of the estimation of the acoustic characteristics of a loudspeakers-room system according to the present invention.

According to the present invention the auditory source width is estimated by sinusoidally fluctuating interaural time difference (ITD) - noises output by at least one pair of loudspeakers 1. The outputs of each loudspeaker 1 of the at least one pair of loudspeakers (each output corresponds to one auditory stereo channel) are detected by microphones 2 installed in a dummy head. The loudspeakers and the dummy head are located in a closed room. The acoustic characteristics of the loudspeakers-room system are quantified by the inventive estimate of the auditory source width.

As already mentioned above, according to a preferred example the noise signals output by the loudspeakers 1 are generated by a computer according to

$$l(t) = \sum_{i=1}^{N} A \sin\left( \frac{2\,\pi\,f_i\,t}{F_s} + \theta_i + \pi\,f_i\,\Delta t \sin\left( \frac{2\,\pi\,F_M\,t}{F_s} \right) \right)$$

and

$$r(t) = \sum_{i=1}^{N} A \sin\left( \frac{2\,\pi\,f_i\,t}{F_s} + \theta_i - \pi\,f_i\,\Delta t \sin\left( \frac{2\,\pi\,F_M\,t}{F_s} \right) \right),$$

respectively, wherein A denotes an amplitude, $f_i$, $F_M$ and $F_s$ denote the carrier frequencies, the modulation frequency and the sampling rate, respectively, $\Delta t$ is a predetermined maximum interaural time difference (ITD), $\theta_i$ are some arbitrarily chosen phases and t is the discrete time index.

Thus, two frequency-modulated broadband noise signals are generated with a predetermined maximum ITD that changes periodically as a function of time. The distance of the carrier frequencies of the two signals may be chosen, e.g., as some tenth part of 1 Hz, e.g., 0.1 Hz. Typical modulation frequencies may range from some Hz to some thousand Hz, The maximum ITD may be chosen from $\Delta t = 10$ to 1000 $\mu$s, in particular, 60, 90, 120, 150, 180 $\mu$s. The arbitrary phases are randomly chosen for every signal from 0 to 2 IT. A typical sampling rate is, e.g., 48 kHz.

The signals detected by the microphones, i.e. the obtained digital microphone signals, are subject to processing that models the processing of audio signals by the human auditory system. First, filtering by the outer ears, the pinnae, 3. Reflections and deflections at the human torso, head and the pinna are taken into account by using a manikin.

Furthermore, the microphone signals are bandpass filtered by bandpass filter-banks 4 and subsequently processed by half-wave rectification and lowpass filtering 6 (at about 1 kHz) in order to model the binaural processing by the inner ear, i.e. the division of the audio signal in frequency bands by the cochlea and the processing according to the hair cell transformation.

Then, the interaural time differences (ITD) and interaural level differences (ILD) are estimated 7 from a combination of the thus processed microphone signals. This binaural processing is supplemented by an adequate monaural processing of the individual microphone signals to simulate the processing of an audio signal input exclusively to one ear.

Eventually, the information obtained by the binaural and monaural processing are combined in a signal processing unit 8 and subject to a correlation-azimuth transformation to obtain a three-dimensional binaural activity plot over time and the lateralization, i.e. the lateral width of the binaural activity measured in degrees with 0° for the meridian plane, as a measure for the auditory source width. The lateralization or lateral width ranges from -90° to +90°.

As shown in the Figure head-related transfer function (HRTF) processing is performed for re-mapping in the central processing unit, i.e. an estimation of the azimuth angle is done by a remapping function that takes into account the head-related transfer functions.

Further details of the employed correlation-azimuth transformation / remapping are given by Gaik, W. (1993): "Combined evaluation of interaural time and intensity differences: Psychoacoustic results and computer modeling", J. Acoust. Soc. Am., Vol. 94, 98 - 110. Additional details on the employed algorithm can also be found in the paper by Gaik; see also Lindemann, W. (1986): "Extension of a binaural cross-correlation model by contralateral inhibition. I. Simulation of lateralization for stationary signals", J. Acoust. Soc. Am., Vol. 80, 1608 - 1622.

It is to be understood that some or all of the above described features can also be combined in different ways.

**Claims**

1.  Method for estimating acoustic characteristics of a loudspeakers-room system, in particular, the auditory source width, comprising

    generating at least one first and at least one second frequency modulated noise signal;

    outputting the at least one first noise signal by a first loudspeaker of at least one pair of loudspeakers;

    outputting the at least one second noise signal by the second loudspeaker of the at least one pair of loudspeakers;

    detecting binaurally, in particular, by means of a dummy head, the at least one first and at least one second noise signals to obtain detected signals;

    filtering the detected signals by an auditory filter bank, in particular, by a non-uniform auditory bandpass filter bank, to obtain sub-band signals for a predetermined number of sub-bands;

    determining the binaural activity of at least one of the sub-band signals; and

    determining the acoustic source width of the generated noise signals based on the determined binaural activity of the at least one of the sub-band signals.

2.  The method according to claim 1, comprising before filtering of the detected signals to obtain filtered sub-band signals for a predetermined number of sub-bands the steps of

    filtering the detected signals by head-related transfer functions to obtain first filtered signals; and

    filtering the first filtered signals corresponding to the physiologic filtering of the human middle ear to obtain second filtered signals;

    and further comprising half-wave rectifying and low-pass filtering the filtered sub-band signals to obtain half-wave rectified sub-band signals;

    and wherein the step of determining the binaural activity of the at least one of the filtered sub-band signals comprises the steps of

    determining the interaural time differences and the interaural level differences of the half-wave rectified sub-band signals; and

    combining the interaural time differences and the interaural level differences to obtain the binaural activity over time and lateral width for each of the predetermined number of sub-bands.

3.  The method according to claim 1 or 2, wherein the at least one first and at least one second noise signals are binaurally detected by two microphones installed in the artificial ears of a dummy head.

4.  The method according to one of the preceding claims, wherein the first and the second noise signals represent broadband noise including sinusoidally varying interaural time differences.

5.  The method according to claim 4, wherein the first and the second noise signals are represented by

$$l(t) = \sum_{i=1}^{N} A \sin\left( \frac{2\pi f_i t}{F_s} + \theta_i + \pi f_i \Delta t \sin\left( \frac{2\pi F_M t}{F_s} \right) \right)$$

$$r(t) = \sum_{i=1}^{N} A \sin\left( \frac{2\pi f_i t}{F_s} + \theta_i - \pi f_i \Delta t \sin\left( \frac{2\pi F_M t}{F_s} \right) \right),$$

respectively, wherein A denotes an amplitude, $f_i$, $F_M$ and $F_s$ denote the carrier frequencies, the modulation frequency and the sampling rate, respectively, $\Delta t$ is a predetermined maximum interaural time difference, $\theta_i$ are some arbitrarily chosen phases and t is the discrete time index.

6.  The method according to one of the preceding claims, further comprising smoothing of the binaural activity in time and wherein the acoustic source width is determined from the lateral width of the temporally smoothed binaural activity.

7. The method according to claim 6, wherein the smoothing of the binaural activity in time is performed by a floating rectangular integration window, in particular, of about 10 - 200 ms duration.

8. The method according to one of the preceding claims, further comprising determining the average value of the lateralization of the binaural activity over time and the predetermined number of sub-bands and wherein the acoustic source width is determined by this average value.

9. The method according to one of the preceding claims, further comprising cutting the binaural activity at the edges, in particular, by means of a cutting function with an adaptive threshold, and wherein the acoustic source width of the generated noise signals is determined based on the cut binaural activity.

10. The method according to one of the preceding claims, wherein the acoustic source width is estimated by the lateral extent of the binaural activity in single frequency-bands weighted over all auditory frequency bands by applying a weighting curve.

11. The method according to one of the preceding claims, comprising determining binaural activities of more than one of the filtered sub-band signals, in particular, of all of the filtered sub-band signals, and respectively determining the acoustic source width from each of the filtered sub-band signals for which binaural activities are determined based on the respective binaural activities, and further comprising determining a weighted average of the acoustic source widths for the filtered sub-band signals for which binaural activities are determined to obtain a single averaged acoustic source width.

12. The method according to claim 11, wherein
the at least one first noise signal is output by respective first loudspeakers of at least two pairs of loudspeakers;
the at least one second noise signal is output by the respective second loudspeakers of the at least two pair of loudspeakers;
a single averaged acoustic source width is obtained for each of the pairs of loudspeakers; and
the single averaged acoustic source widths obtained for each of the pairs of loudspeakers are weighted depending on the position of the pairs of loudspeakers in the room of the loudspeakers-room system to obtain a single weighted overall acoustic source width.

13. The method according to one of the preceding claims, wherein a determined value of a binaural activity that lies below a predetermined value is set to zero.

14. Computer program product, comprising one or more computer readable media having computer-executable instructions for performing the steps of the method according to one of the preceding claims.

15. Sound analyzing system for estimating acoustic characteristics of a loudspeakers-room system, comprising
a computer configured to generate at least one first and at least one second frequency modulated sinusoidally varying noise signal;
at least one pair of loudspeakers configured to receive the at least one first and at least one second noise signals and to output the at least one first noise signal by a first loudspeaker of the at least one pair of loudspeakers and to output the at least one second noise signal by the second loudspeaker of the at least one pair of loudspeakers;
binaural recording means, in particular, comprising a dummy head comprising a pair of ear-shaped molds wherein each of the molds accommodates a microphone configured to detect the at least one first and at least one second noise signals, wherein the binaural recording means is configured to obtain recorded signals based on the least one first and at least one second noise signals output by the at least one pair of loudspeakers and to input the recorded signals into the computer; and
wherein the computer is also configured to determine the binaural activity of the recorded signals and to determine the acoustic source width of the at least one first and at least one second noise signals based on the determined binaural activity of the recorded signals.

16. The sound analyzing system according to claim 15, wherein the computer is configured to generate the first and the second noise signals according to

$$l(t) = \sum_{i=1}^{N} A \sin\left(\frac{2\pi f_i t}{F_s} + \theta_i + \pi f_i \Delta t \sin\left(\frac{2\pi F_M t}{F_s}\right)\right)$$

$$r(t) = \sum_{i=1}^{N} A \sin\left(\frac{2\pi f_i t}{F_s} + \theta_i - \pi f_i \Delta t \sin\left(\frac{2\pi F_M t}{F_s}\right)\right),$$

wherein A denotes an amplitude, $f_i$, $F_M$ and $F_s$ denote the carrier frequencies, the modulation frequency and the sampling rate, respectively, $\Delta t$ is a predetermined maximum interaural time difference, $\theta_i$ are some arbitrarily chosen phases and t is the discrete time index.

17. The sound analyzing system according to one of the claims 15 and 16, wherein the computer is configured to process the recorded signals by
filtering the recorded signals by head-related transfer functions to obtain first filtered signals;
filtering the first filtered signals corresponding to the physiologic filtering of the middle ear to obtain second filtered signals;
sub-band filtering the second filtered signals to obtain sub-band signals for a predetermined number of sub-bands;
half-wave rectifying and low-pass filtering the sub-band signals to obtain half-wave rectified sub-band signals; and to
determine the interaural time differences and the interaural level differences of the half-wave rectified sub-band signals; and to
combine the interaural time differences and the interaural level differences to obtain the binaural activity over time for each of the predetermined number of sub-bands.

18. The sound analyzing system according to one of the claims 15 to 17, further comprising a floating rectangular integration window filtering means configured to smooth the binaural activity in time and wherein the computer is configured to determine the acoustic source width from the lateral width of the temporally smoothed binaural activity.

19. The sound analyzing system according to one of the claims 15 to 18, wherein the computer is configured to determine a weighted average of the acoustic source widths for the filtered sub-band signals to obtain a single averaged acoustic source width.

FIG. 1

**European Patent Office**

**EUROPEAN SEARCH REPORT**

Application Number

EP 07 00 3585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WOLFGANG HESS ET AL: "Acoustical evaluation of virtual rooms by means of binaural activity patterns" PREPRINTS OF PAPERS PRESENTED AT THE 115TH AES CONVENTION, no. paper-5864, 10 October 2003 (2003-10-10), page 8pp, XP007902553 * the whole document * | 1-19 | INV. H04S7/00 ADD. G01H7/00 |
| Y | HESS ET AL: "Evaluation of auditory spatial impression in performance spaces" FORUM ACUSTICUM BUDAPEST. EUROPEAN CONGRESS ON ACOUSTICS, 2005, 29 August 2005 (2005-08-29), pages 1735-1740, XP007902554 * the whole document * | 1-19 | |
| Y | EP 1 522 868 A (HARMAN BECKER AUTOMOTIVE SYS [DE]) 13 April 2005 (2005-04-13) * paragraphs [0007] - [0018], [0021] - [0024], [0026], [0027], [0037] - [0040]; figures 1,4-7 * | 1-19 | |
| A | BLAUERT J: "INSTRUMENTAL ANALYSIS AND SYNTHESIS OF AUDITORY SCENES: COMMUNICATION ACOUSTICS" AES 22ND INTERNATIONAL CONFERENCE ON VIRTUAL, SYNTHETIC AND ENTERTAINMENT AUDIO, 15 June 2002 (2002-06-15), pages 1-9, XP007902555 * the whole document * | 1-19 | TECHNICAL FIELDS SEARCHED (IPC) G01H H04S |

-/--

The present search report has been drawn up for all claims

| Place of search | Date of completion of the search | Examiner |
|---|---|---|
| Munich | 12 July 2007 | Navarri, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 00 3585

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WESLEY GRANTHAM AND FREDERIC L WIGHTMAN D: "Detectability of varying interaural temporal differences" ACOUSTICAL SOCIETY OF AMERICA. JOURNAL, ACOUSTICAL SOCIETY OF AMERICA, MELVILLE, NY, US, vol. 63, no. 2, February 1978 (1978-02), pages 511-523, XP007902556 ISSN: 0001-4966 * the whole document * ----- | 1-19 | |
| A | LINDEMANN W: "Extension of a binaural cross-correlation model by contralateral inhibition. I. Simulation of lateralization for stationary signals" JOURNAL OF THE ACOUSTICAL SOCIETY OF AMERICA, AIP / ACOUSTICAL SOCIETY OF AMERICA, MELVILLE, NY, US, vol. 80, no. 6, December 1986 (1986-12), pages 1606-1622, XP007902557 ISSN: 0001-4966 * the whole document * ----- | 1-19 | TECHNICAL FIELDS SEARCHED (IPC) |

The present search report has been drawn up for all claims

| Place of search | Date of completion of the search | Examiner |
|---|---|---|
| Munich | 12 July 2007 | Navarri, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

EP 1 962 559 A1

## ANNEX TO THE EUROPEAN SEARCH REPORT
## ON EUROPEAN PATENT APPLICATION NO.

EP 07 00 3585

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2007

| Patent document cited in search report | | Publication date | Patent family member(s) | | Publication date |
|---|---|---|---|---|---|
| EP 1522868 | A | 13-04-2005 | US | 2005078833 A1 | 14-04-2005 |

EPO FORM P0459

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. BLAUERT ; W. COBBEN.** Some Consideration of Binaural Cross Correlation Analysis. *Acustica,* 1978, vol. 39, 96-104
- **JEFFRESS, L.A.** A place theory of sound localization. *J. Comparative and Physiological Psychology,* 1948, vol. 41, 35-39
- **LINDEMANN, W.** Extension of a binaural cross-correlation model by contralateral inhibition. I. Simulation of lateralization for stationary signals. *J. Acoust. Soc. Am.,* 1986, vol. 80, 1608-1622
- **GAIK, W.** Combined evaluation of interaural time and intensity differences: Psychoacoustic results and computer modeling. *J. Acoust. Soc. Am.,* 1993, vol. 94, 98-110